# EUROPÄISCHE PATENTSCHRIFT

(11) **EP 1 173 664 B1**
(45) Veröffentlichungstag und Bekanntmachung des Hinweises auf die Patenterteilung: **08.12.2004**
(21) Anmeldenummer: 01915036.6
(22) Anmeldetag: 24.02.2001
(51) Int. Cl.: F02C 7/18, F01D 5/18

(54) **KÜHLLUFTSYSTEM**
COOLING AIR SYSTEM
SYSTEME D'AIR DE REFROIDISSEMENT

(30) Priorität: 29.02.2000 DE 10009655
(43) Veröffentlichungstag der Anmeldung: 23.01.2002
(73) Patentinhaber: MTU Aero Engines GmbH, 80995 München (DE)
(72) Erfinder: KLINGELS, Hermann, 85336 Eching (DE)
(74) Vertreter: Lindner-Vogt, Karin, Dipl.-Phys.
(86) Internationale Anmeldenummer: PCT/DE2001/000725
(87) Internationale Veröffentlichungsnummer: WO 2001/065095

(56) Entgegenhaltungen:
- EP-A- 0 414 028
- GB-A- 2 299 378
- US-A- 4 254 618
- US-A- 5 468 123
- US-A- 5 591 007
- US-A- 5 813 835
- PATENT ABSTRACTS OF JAPAN vol. 009, no. 142 (M-388), 18. Juni 1985 (1985-06-18) & JP 60 022003 A (HITACHI SEISAKUSHO KK), 4. Februar 1985 (1985-02-04)

## Beschreibung

Die Erfindung betrifft eine Kühlluftsystem zur Reduktion der thermischen Bauteilbelastung im Turbinen-Hochdruckbereich von Gasturbinen, gemäß dem Oberbegriff des Patentanspruches 1.

Es ist eine seit langem bekannte Maßnahme, in Turbinen, bei denen die Gastemperatur über der zulässigen Werkstofftemperatur der Beschaufelung liegt, die Schaufeln mit Luft zu kühlen. Die durch das Schaufelinnere geführte Kühlluft tritt durch eine Vielzahl von bevorzugt im Bereich der Vorder- und Hinterkante des Schaufelblatts vorhandenen Bohrungen/Öffnungen aus, wobei sich ein Teil der Luft als kühlender bzw. isolierender Film über die Profiloberfläche bewegt. Die erforderliche Kühlluft wird im Hochdruckbereich des Verdichters entnommen, ggf. erst stromabwärts des Brennkammerdiffusors. Verlustbedingt muss der Eintrittsdruck höher sein als der erforderliche Austrittsdruck im Turbinenbereich. Es ist zu beachten, dass Verdichterluft mit höherem Druck auch eine höhere Temperatur aufweist, wodurch die Kühleffektivität abnimmt, so dass die Kühlluftmenge erhöht werden muss. Dies wirkt sich zweifach negativ aus. Zum einen reduziert die nicht als Oxydator für den in die Brennkammer eingespritzten Brennstoff verfügbare Kühlluft die Triebwerksleistung unmittelbar, zum anderen verschlechtert sich mit zunehmender Kühlluftmenge die Aerodynamik der Turbine, so dass Leistung und Wirkungsgrad weiter sinken.

Aus der EP 0760 051 B 1 ist es bekannt, Turbinen-Leitschaufeln mit zwei getrennten Kühlpassagen im Schaufelinneren auszuführen. Die Vorderkanten-Kühlpassage für innere Prallkühlung und äußere Filmkühlung mit Luftaustritt gegen den Heißgas-Staudruck benötigt einen hohen Kühlluftdruck und wird daher mit Verdichterluft aus einer der hintersten, brennkammernahen Verdichterstufen gespeist. Die Hinterkanten-Kühlpassage mit Luftaustritt in Strömungsrichtung des Heißgases kann mit deutlich geringerem Kühlluftdruck arbeiten und wird hier mit Verdichterluft aus einer weiter stromaufwärts liegenden, brennkammerferneren Verdichterstufe gespeist. Nachteilig hierbei ist, dass die sich stark aufheizende Schaufelvorderkante mit hochverdichteter, relativ heißer Kühlluft in wenig effektiver Weise gekühlt wird, mit der Erfordernis einer hohen Kühlluftmenge je Zeiteinheit bzw. mit der Folge einer ungünstig hohen Werkstofftemperatur. Der hintere Schaufelbereich wird mit Verdichterluft geringerer Temperatur effektiver gekühlt und ist somit weniger kritisch. Das beschriebene System ermöglicht es zwar, im hinteren Schaufelbereich den Kühlluftdurchsatz zu reduzieren und so die Aerodynamik zu verbessern, durch das "thermische Ungleichgewicht" zwischen vorderem und hinterem Schaufelteil sind aber zusätzliche, lebensdauerreduzierende Thermospannungen zu erwarten. Die in Relation zu "konventionell" gekühlten Schaufeln unverändert hohe Vorderkantentemperatur lässt de facto auch keine Verbesserung hinsichtlich der Lebensdauer zu.

Die DE 197 33 148 C1 schützt eine Kühlvorrichtung für die erste Turbinenstufe einer Gasturbine, welche nach einem vergleichbaren Prinzip arbeitet, wie es in der EP-Patentschrift offenbart ist. Die Leitschaufeln der ersten Stufe - und ggf. weiterer Stufen weisen je eine stromaufwärtige und eine von dieser getrennte, stromabwärtige Kühlpassage auf. Die beiden Kühlpassagen werden mit hinsichtlich Druck und Temperatur unterschiedlichen Luftströmen beaufschlagt, wobei im stromaufwärtigen Profilbereich höher verdichtete und somit heißere Luft verwendet wird. Der kühlere Luftstrom wird entweder bei einer weiter stromaufwärtigen Verdichterstufe abgezapft oder er wird durch Druckminderung unmittelbar aus dem heißeren, höher verdichteten Luftstrom gewonnen. Die Vor- und Nachteile sind i.w. die gleichen, wie beim vorgenannten EP-Patent.

Die DE 695 04 240 T2 betrifft ein Kühlverfahren für eine Gasturbinen-Kraftanlage, bei dem der Hochdruckturbinenbereich mit einem Gemisch aus Kühlluft und Wasserdampf gekühlt wird, wobei der Dampfanteil in seiner Masse stark überwiegt. Die für die die Dampferzeugung nötige Energie wird vorzugsweise dem Gasturbinenabgas entnommen. Ein im Kühlluftstrom definiert erzeugter Druckabfall wird als Steuergröße für den Massenstrom des zugemischten Kühldampfes verwendet. Eine vorteilhafte Vorrichtung zur Erzeugung des gewünschten Druckabfalls kann ein Wärmetauscher sein, mit dessen Hilfe die Kühllufttemperatur reduziert wird. Die eigentliche Schaufelkühlung erfolgt "konventionell", d.h. es gibt jeweils nur eine Kühlpassage für ein Kühlmittel-Gemisch (Luft/Dampf) im Schaufelinneren. Das geschützte Prinzip ist offensichtlich nur für stationäre Anlagen bzw. Anlagen in größeren Wasserfahrzeugen geeignet.

Betrachtet man "konventionell", d.h. mit einem Luftstrom durch das Schaufelinnere gekühlte Leit- und Laufschaufeln, so liegt im Betrieb die Temperatur im Bereich der Vorderkante/Eintrittskante etwa auf dem Niveau wie im Bereich der Hinterkante/Austrittskante, im mittleren Profilbereich ist sie aber deutlich niedriger als an Vorder- und Hinterkante. Der maximale Temperaturunterschied wird beim Beschleunigen, d.h. in einem transienten Betriebszustand, häufig noch größer, da sich Vorder- und Hinterkante noch schneller aufheizen als der voluminösere und besser gekühlte Mittelbereich. Temperaturunterschiede induzieren Thermospannungen, die sich negativ auf die Bauteillebensdauer auswirken. Die lokal extremen Werkstofftemperaturen an Ein- und Austrittskante können das Werkstoffgefüge schädigen, was ebenfalls zu einer Reduzierung der Lebensdauer führt. Eine Erhöhung des Kühlluftdurchsatzes führt nur zu einer teilweisen Abhilfe unter Inkaufnahme einer reduzierten Triebwerksleistung bzw. eines schlechteren Wirkungsgrades.

Die US-A-5 813 835 zeigt eine Luftgekühlte Gasturbinenschaufel, die vorderen, mittleren und hinteren Strömungskammeren aufweist wobei die Kühlluft durch die mittleren einen Serpentinantigen Verlauf hat.

Aus GB-A-2 299 378 ist die zusätzliche Abhühlung von Kühlluft mittels eines Wärmetauschens im Bypass-Strom eines Triebwerkes bekannt.

Demgegenüber besteht die Aufgabe der Erfindung darin, ein Kühlluftsystem zur Reduktion der thermischen Bauteilbelastung im Turbinen-Hochdruckbereich von Gasturbinen zu schaffen, welches durch Reduktion der Temperaturunterschiede sowie der Maximaltemperaturen im Bauteil letztlich eine deutliche Erhöhung der Bauteillebensdauer bzw. eine spürbare Verbesserung hinsichtlich Wirkungsgrad und Leistung der Gasturbine insgesamt ermöglicht.

Diese Aufgabe wird durch die in Anspruch 1 gekennzeichneten Merkmale gelöst, in Verbindung mit den gattungsbildenden Merkmalen in dessen Oberbegriff.

Bei den betroffenen Bauteilen handelt es sich vorrangig, aber nicht ausschließlich, um thermisch hochbelastete Schaufeln. Somit können neben Leit- und/oder Laufschaufeln noch andere Teile mit diesem Kühlluftsystem thermisch entlastet werden. Die Schaufeln sollen in der Regel zu Turbinenstufen gehören, welche in Axialbauweise ausgeführt sind, d.h. vorwiegend axial vom Heißgas durchströmt werden.

Jede der Schaufeln soll mindestens drei Strömungskammern über die Profillänge im Schaufelblattinneren aufweisen. Die Kühlluftführung vom Verdichter zur Turbine umfasst wenigstens einen Wärmetauscher, mit dessen Hilfe der Wärmeinhalt eines Teilstroms der Kühlluft deutlich reduziert wird. Somit wird Kühlluft bereitgestellt, die trotz hohen Druckes ein gemäßigtes Temperaturniveau aufweist. Das Druckniveau wird in der Regel auch für Vorderkantenaustritt aus brennkammernahen Leit- und Laufschaufeln ausreichen. Diese zusätzlich gekühlte Kühlluft wird zu der vordersten und der hintersten Strömungskammer der Schaufeln geführt. Die mindestens eine Strömungskammer im mittleren Profilbereich wird mit wärmerer Kühlluft beaufschlagt, welche ohne gezielten Wärmetausch direkt vom Verdichter zugeführt wird. Damit wird zunächst erreicht, dass die Vorder- und Hinterkanten der Schaufeln kühler bleiben. Durch die weniger starke Kühlung des mittleren Schaufelbereichs nivelliert sich der Temperaturverlauf über die Profillänge, d.h. die maximal auftretenden Temperaturunterschiede werden deutlich reduziert und somit auch die thermisch induzierten Bauteilspannungen. Somit können die Schaufeln mechanisch stärker belastet werden, z.B. durch höhere Drehzahlen/Fliehkräfte, bzw. sie können bei gleichbleibender Belastung dünnwandiger, filigraner und somit leichter ausgeführt werden. Infolge des reduzierten, mittleren Temperaturniveaus der Kühlluft kann die pro Zeiteinheit entnommene Kühlluftmenge reduziert werden. Die Vorteile hinsichtlich Wirkungsgrad und Leistung der Gasturbine insgesamt sind offensichtlich. Der konstruktive und gewichtsmäßige Mehraufwand für Wärmetausch und separate Kühlluftführungen wird durch die Vorteile überwogen. Es sei noch gesagt, dass die durch den Wärmetauscher geführte Kühlluft und die ohne Wärmetausch geführte Kühlluft zunächst das selbe Druck- und Temperaturniveau aufweisen können (gleiche oder vergleichbare Entnahmestellen), dass aber auch verschiedene Entnahmestellen mit unterschiedlichen thermodynamischen Werten möglich sind, beispielsweise unterschiedliche Verdichterstufen. Die Kühlluftführung verläuft aber generell vom Hochdruckbereich des Verdichters zum Hochdruckbereich der Turbine. Bei mehrwelligen Gasturbinen gibt es einen Hochdruckverdichter und eine Hochdruckturbine als konstruktiv eigenständige Komponenten, die über eine separate Hochdruckwelle mechanisch gekoppelt sind. Auch solche Bauarten fallen uneingeschränkt in den Anwendungsbereich der Erfindung.

Die Erfindung wird anschließend anhand der Zeichnungen noch näher erläutert. Dabei zeigen in vereinfachter, teilweise schematischer Darstellung:
Figur 1 einen Teillängsschnitt durch eine Gasturbine im Hochdruck- und Brennkammerbereich,
Figur 2 einen Querschnitt durch eine Schaufel, und
Figur 3 ein Diagramm mit zwei Temperaturverläufen entlang der Schaufelsehne.

Das Kühlluftsystem 1 wird hier am Beispiel eines Fantriebwerks, das heißt, eines Zweikreis-Turboluftstrahltriebwerkes, dargestellt. Von diesem ist nur die obere Hälfte und hierbei auch nur der Hochdruck- und Brennkammerbereich wiedergegeben. Der Verdichter 2 befindet sich in der Figur links, die Turbine 4 rechts und die Brennkammer 3 in der Mitte. Es handelt sich um eine Flugtriebwerk in durchgehend axialer Bauart, so dass der Haupt- und der Bypassstrom i.w. horizontal von links nach rechts verlaufen. Man erkennt die Längsmittelachse X des Triebwerks, darüber die Bauteile des Kerntriebwerks und ganz oben den Bypasskanal 21. Der Verdichter 2 wird von der Turbine 4 über eine Welle 5 angetrieben. Da es sich hier beispielsweise um ein Zweiwellen-Triebwerk handeln soll, ist der Verdichter 2 konkret ein Hochdruckverdichter, die Turbine 4 eine Hochdruckturbine und die Welle 5 somit eine Hochdruckwelle. Die Bauelemente des Niederdruckbereichs, wie z.B. die Niederdruckwelle, sind hier der besseren Übersicht wegen nicht wiedergegeben. Vom Verdichter 2 erkennt man einen Leitschaufelkranz, einen Laufschaufelkranz mit Scheibe sowie als Übergangselement zur Brennkammer 3 den Brennkammerdiffusor 7. Zur Brennkammer 3 gehören die innere Hochtemperaturzone 8, durch Flammen symbolisiert, wo die heiße Oxidation des Brennstoffs mit Luftsauerstoff erfolgt, sowie der äußere Brennkammermantel 9, welcher nur von hochverdichteter Luft durchströmt wird. Die Turbine 4 (Hochdruckturbine) ist einstufig dargestellt, d.h. mit einem brennkammerseitigen Kranz von Leitschaufeln 13 und einem diesem stromabwärts folgenden Kranz von Laufschaufeln 14 an einer Turbinenscheibe 15. Das Kühlluftsystem 1 hat in jedem Fall die Aufgabe, die thermisch kritischen Leit- und Laufschaufeln 13,14 optimal zu kühlen. Zu diesem Zweck werden zwei Kühlluftströme mit stark unterschiedlicher Temperatur aber mit vergleichbarem Druck benötigt. Dazu ist mindestens ein strömungstechnisch verlustarmer Wärmetauscher 6 erforderlich, welcher hier im kühlen Bypasskanal 21 angeordnet ist Die gesamte, benötigte Kühlluftmenge wird vorliegend stromabwärts des Brennkammerdiffusors 7 im Bereich des Brennkammermantels 9 entnommen. Konkret sind drei separate Entnahmestellen 10,1 1,12 dargestellt, wovon die erste (10) direkt zum Wärmetauscher 6 führt. Die zweite (11) führt zu einem Regel- und Zumischventil 22, die dritte (12) führt vom stromabwärtigen Brennkammerende zu den Laufschaufeln 14 der Turbine 4. Eine weitere, nicht näher bezeichnete Entnahmestelle liegt am radial äußeren Ende jeder Leitschaufel 13, am Übergang zum Brennkammermantel 9.

In der Figur sind mehrere Strömungspfade für die Kühlluft erkennbar. Die Pfade der heißeren Kühlluft sind durchgehend gepunktet dargestellt, die Pfade der kälteren, vom Wärmetauscher 6 kommenden Kühlluft sind mit aufeinanderfolgenden Doppelpunkten und Strichen wiedergegeben.

Heißere Kühlluft wird direkt durch den Brennkammermantel 9 radial von außen (oben) in den mittleren Profilbereich der Leitschaufeln 13 geführt, ebenso über die Entnahmestelle 12 radial von innen (unten) in den mittleren Profilbereich der Laufschaufeln 14 der Turbine 4.

Ein Teilstrom der Kühlluft wird von der Entnahmestelle 10 in den Wärmetauscher 6 zur Absenkung der Kühllufttemperatur geleitet. Der Wärmetauscher 6 wird in der Regel ein Luft/Luft-Wärmetauscher sein, wobei der wärmeaufnehmende Luftstrom hier die Fan-Abluft (Bypassluft) ist. Siehe hierzu den linken Bereich 23. Im rechten Bereich 24 ist eine weitere Möglichkeit der Wärmeübertragung dargestellt und zwar von der Kühlluft auf den Brennstoff 25 des Triebwerks. In der praktischen Ausführung können die beiden Bereiche 23,24 räumlich getrennt sein, d.h. separate Baugruppen/Module bilden . Nach Austritt aus dem Wärmetauscher 6 wird die nunmehr erheblich kältere Kühlluft durch ein Regel- und Zumischventil 22 geführt, welches auch eine von der Entnahmestelle 11 kommende Zuleitung für heißere Kühlluft aufweist. Durch Mischen der gekühlten und der ungekühlten Kühlluft unter Variation des Mengenverhältnisses lässt sich die Temperatur der aus dem Regel- und Zumischventil austretenden Kühlluft gezielt einstellen. Auch der Volumenstrom dieser Kühlluft kann über den Grad der Ventilöffnung eingestellt werden, im Extremfall von "Null" bis zu einem Maximalwert. Die Temperatur dieser Kühlluft ist somit zwischen dem Wert am Verdichteraustritt und dem Wert am Wärmetauscheraustritt variierbar. Der weitere Strömungspfad dieser gekühlten Kühlluft führt hier durch Streben des Brennkammerdiffusors 7 in den Bereich der Welle 5 und längs dieser in den Turbinenbereich. Da der Wärmetauscher 6 und das Regel- und Zumischventil 22 zu gewissen Druckverlusten im Kühlluftstrom führen, kann es erforderlich sein, dessen Druckniveau wieder anzuheben. Hierzu zeigt die Figur zwei Beispiele. Mit 19 ist ein zusätzlicher Kühlluftverdichter bezeichnet, welcher als Axialverdichter direkt auf der Welle 5 sitzt. Alternativ ist als Position 20 ein Kühlluftverdichter gezeigt, der als Radialverdichter auf einer Seite der Turbinenscheibe 15 an einer mitrotierenden Deckplatte 18 sitzt. Nicht dargestellt ist die Möglichkeit, einen Kühlluftverdichter außerhalb des Kerntriebwerks, z.B. an einem Geräteträger, anzuordnen, wobei die Antriebsleistung auch von einer Triebwerkswelle entnommen würde. Unabhängig vom Vorhandensein eines der genannten Kühlluftverdichter führt der Strömungspfad der gekühlten Kühlluft letztlich zu den sowie in die Leit- und Laufschaufeln 13,14, jeweils in eine Strömungskammer nahe der Vorderkante und in eine nahe der Hinterkante jeder Schaufel. Dargestellt ist eine strömungstechnische Parallelschaltung der Leit- zu den Laufschaufeln mit einer Aufteilung des gekühlten Kühlluftstromes. Es wäre auch möglich, die Leit- mit den Laufschaufeln strömungstechnisch in Reihe zu schalten, wobei die gekühlte Kühlluft radial von außen in die Leitschaufeln eintreten würde, und der nicht dem Heißgasstrom zugemischte Kühlluftanteil radial innen aus den Leitschaufeln austreten und in die Laufschaufeln eintreten würde. Solche Modifikationen sind dem Fachmann geläufig und daher nicht gesondert dargestellt. Aus der Figur ist ein weiterer Strömungspfad für die gekühlte Kühlluft erkennbar, der durch Öffnungen 17 in das Innere der Welle 5 und weiter durch die zentrale Öffnung 16 der Turbinenscheibe 15 führt. Das hat den Zweck, den zentralen Bereich der Turbinenscheibe 15 temperaturmäßig an den Umfangs- und Schaufelbereich anzupassen und dadurch Thermospannungen in der Turbinenscheibe 15 selbst zu minimieren.

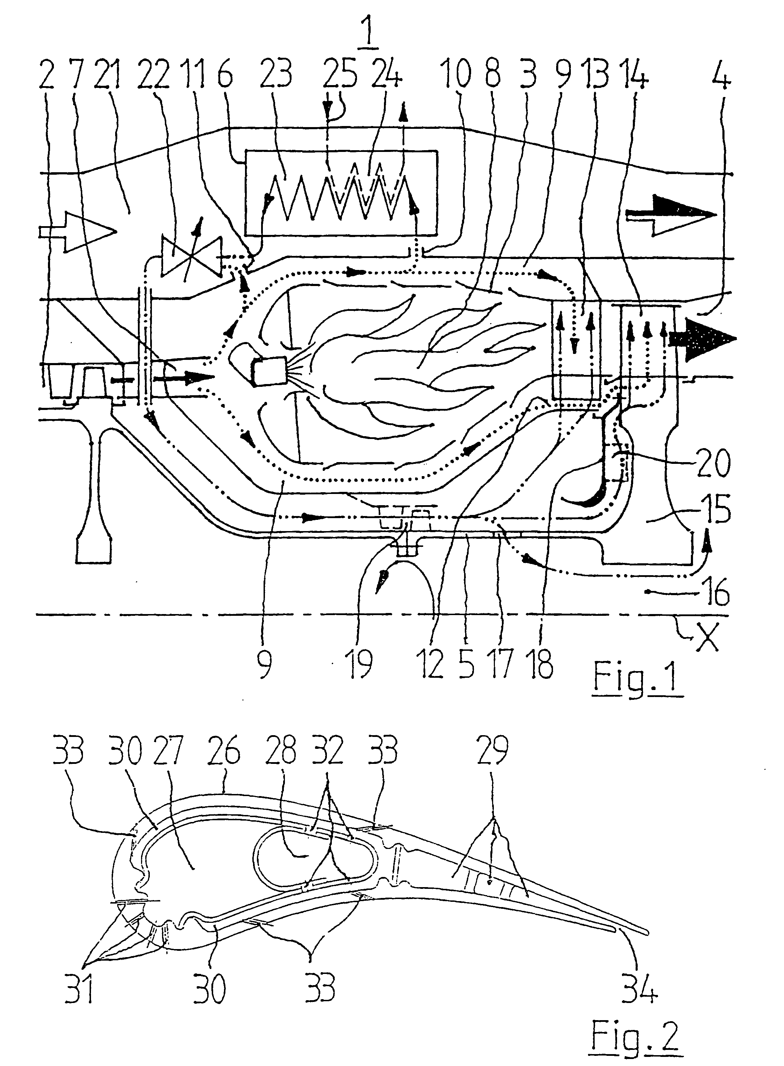

Die Strömungsführung in den Schaufeln lässt sich noch besser anhand von Figur 2 erklären. Die Schaufel 26 weist einen für Leitschaufeln typischen Aufbau auf, das Prinzip ist aber auch auf Laufschaufeln übertragbar. Innerhalb der hohlen Schaufel 26 sind drei Strömungskammern 27,28,29 angeordnet, wobei ein zusätzlicher Zwischenraum 30 volumetrisch/strömungstechnisch der mittleren Strömungskammer 28 zuzurechnen ist. Die vordere und die hintere Strömungskammer 27,29 werden mit der selben, gekühlten Kühlluft- vom Wärmetauscher bzw. vom Regel- und Zumischventil kommend - beaufschlagt. Die mittlere Strömungskammer 28 hingegen wird mit deutlich heißerer, ungekühlter Kühlluft versorgt. Im Bereich des Profilstaupunktes an der Schaufelvorderkante sind Kühlluftbohrungen 31 angeordnet, die Kühlluft aus der vorderen Strömungskammer 27 austreten lassen. Die mittlere Strömungskammer 28 lässt die heißere Kühlluft über Kühlluftbohrungen 32 im Sinne einer Prallkühlung zunächst in einen Zwischenraum 30 austreten, der sich profilbezogen weiter nach vorne erstreckt, als die Strömungskammer 28 selbst, wobei mit einem gewissen Wärmeaustausch zur Strömungskammer 27 durch die dünne, innere Trennwand zu rechnen ist. Der letztendliche Austritt der Kühlluft aus dem Schaufelprofil erfolgt über die Kühlluftbohrungen 33. Die hintere Strömungskammer 29 wird großteils von Gusskonturen gebildet und besitzt hier als Austritt einen Kühlluftspalt 34 an der Schaufelhinterkante.

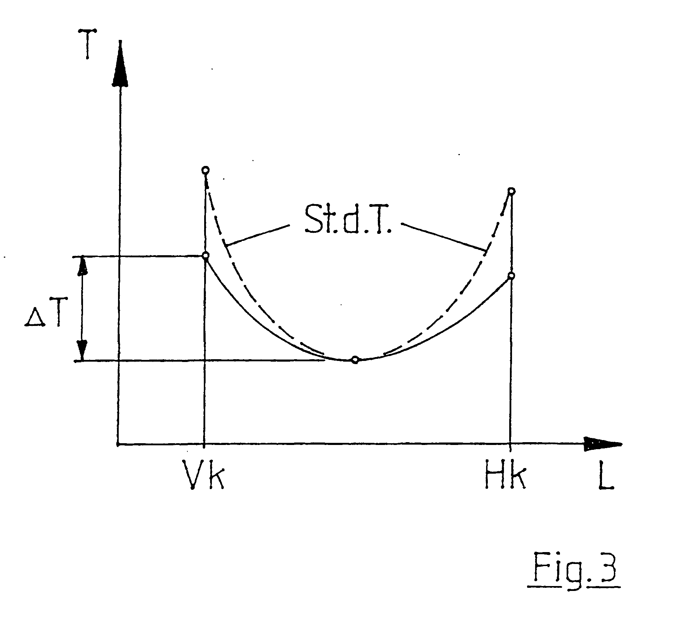

Figur 3 schließlich vergleicht qualitativ den Temperaturverlauf über die Profillänge bei einer Schaufel nach dem Stand der Technik, d.h. mit Kühlung durch einen Luftstrom, mit dem Temperaturverlauf bei einer Schaufel gemäß der Erfindung. T steht für Temperatur, L steht für eine Längenkoordinate in Profillängsrichtung, beispielsweise auf der Profilmittellinie (Profilsehne) oder auf der Profiloberfläche, Vk steht für Vorderkante und Hk für Hinterkante. ΔT ist die maximale Temperaturdifferenz im jeweiligen Profilschnitt und somit eine Maß für thermisch induzierte Bauteilspannungen. Es ist zu erkennen, dass die Minimaltemperatur im mittleren Profilbereich bei beiden Ausführungen auf gleichem oder vergleichbarem Niveau liegt. Zu den beiden Schaufelenden hin wird die Ausführung nach dem Stand der Technik (gestrichelte Kurve) aber deutlich heißer, woraus eine reduzierte Lebensdauer resultiert. Falls jedoch die Maximaltemperatur bei der konventionell gekühlten Schaufel einen werkstoffseitig zulässigen Grenzwert nicht überschreitet, ist es eher sinnvoll, die Kurve der erfindungsgemäßen Schaufel so weit anzuheben, dass ihr Maximalwert auch etwa dem Werkstoffgrenzwert entspricht.

## Patentansprüche

1. Kühlluftsystem zur Reduktion der thermischen Bauteilbelastung im Turbinen-Hochdruckbereich von Gasturbinen, die wenigstens einen Verdichter, eine Brennkammer und eine Turbine umfassen, mit kühlluftdurchströmten Schaufel, welche jeweils mehrere, getrennte Strömungskammern im Schaufelblattinneren für unterschiedliche Luftströme aufweisen, und mit einer die Hochtemperaturzone der Brennkammer umgehenden Kühlluftführung vom Hochdruckbereich bzw. Austrittsbereich des Verdichters bis in die Beschaufelung des Hochdruckbereichs der Turbine, wobei
jede der thermisch hochbelasteten Schaufeln (13,14,26) eine Strömungskammer (27) im Bereich ihrer Vorderkante, mindestens eine Strömungskammer (28) im mittleren Bereich ihres Profils sowie eine Strömungskammer (29) im Bereich ihrer Hinterkante aufweist, **dadurch gekennzeichnet,**
**dass** die Kühlluftführung mindestens einen Wärmetauscher (6) für die Temperaturabsenkung eines Teilstroms der vom Verdichter (2) kommenden Kühlluft sowie wenigstens eine Strömungsverbindung vom Austritt des Wärmetauschers (6) zu der vordersten (27) und zu der hintersten Strömungskammer (29) jeder Schaufel (13,14,26) umfasst, wobei die Kühlluftführung zu der mindestens einen, mittleren Strömungskammer (28) direkt verläuft, d.h. den Wärmetauscher (6) umgeht.

2. Kühfiuftsystem nach Anspruch 1 für ein Flugtriebwerk in Zweikreisbauart, d.h. ein Fantriebwerk, **dadurch gekennzeichnet, dass** der Wärmetauscher (6) stromabwärts des Fans im Bypasskanal (21) angeordnet ist.

3. Kühlluftsystem nach Anspruch 1 oder 2, **dadurch gekennzeichnet, dass** für die aus dem Wärmetauscher (6) kommende Kühlluft ein zusätzlicher Kühlluftverdichter (19,20) vorhanden ist, der direkt oder indirekt von einer den Verdichter (2) mit der Turbine (4) koppelnden Welle (5) angetrieben wird.

4. Kühlluftsystem nach einem oder mehreren der Ansprüche 1 bis 3, **dadurch gekennzeichnet, dass** für die aus dem Wärmetauscher (6) austretende Kühlluft eine Einrichtung zur Regelung der Luftmenge sowie ggf. der Lufttemperatur, letzteres durch Zumischung von heißerer, nicht durch den Wärmetauscher geführter Kühlluft, vorhanden ist, vorzugsweise in Form eines Regel- und Zumischventils (22).

5. Kühlluftsystem nach einem oder mehreren der Ansprüche 1 bis 4, **dadurch gekennzeichnet, dass** Stellen (10,11,12) zur Kühlluftentnahme stromabwärts des Verdichters (2) im Bereich des Brennkammermantels (9) vorgesehen sind.

6. Kühlluftsystem nach einem oder mehreren der Ansprüche 1 bis 5, **dadurch gekennzeichnet, dass** die Kühlluftführung für einen Teilstrom der vom Wärmetauscher (6) bzw. vom Regel- und Zumischventil (22) kommenden Kühlluft einen Strömungspfad durch die zentrale Öffnung (16) wenigstens einer Turbinenscheibe (15) umfasst.

7. Kühlluftsystem nach einem oder mehreren der Ansprüche 1 bis 6, **dadurch gekennzeichnet, dass** der Wärmetauscher (6) einen Bereich (23) mit einem Wärmeübergang Kühlluft/Luft sowie einen Bereich (24) mit einem Wärmeübergang Kühlluft/Brennstoff (25) aufweist, wobei die beiden Bereiche (23,24) räumlich zusammengefasst oder voneinander getrennt sein können.

## Claims

1. Cooling system for the reduction of component thermal loading in the turbine high-pressure area of gas turbines that comprise at least one compressor, a combustion chamber and a turbine, with blades through which cooling air flows, each blade having a plurality of separate flow chambers within the blade sheet for different airstreams, and with a cooling air duct surrounding the high-temperature zone of the combustion chamber from the high-pressure zone or outlet area of the compressor into the blades of the high-pressure zone of the turbine, such that each of the thermally highly stressed blades (13, 14, 26) has a flow chamber (27) in the area of its leading edge, at least one flow chamber (28) in the central area of its section and a flow chamber (29) in the area of its trailing edge,
**characterised in that**
the cooling air flow passes through at least one heat exchanger (6) for reducing the temperature of a part-stream of the cooling air coming from the compressor (2) and at least one flow connection from the outlet of the said heat exchanger (6) to the foremost (27) and to the rearmost (29) flow chamber of each blade (13, 14, 26), while the cooling air path to the at least one, central flow chamber (28) flows directly, i.e. bypassing the heat exchanger (6).

2. Cooling air system according to Claim 1, for an aircraft engine, of dual-circuit construction, i.e. a fan engine,
**characterised in that**
the heat exchanger (6) is positioned downstream from the fan in the bypass channel (21).

3. Cooling air system according to Claims 1 or 2,
**characterised in that**
for the cooling air emerging from the heat exchanger (6) an additional cooling air compressor (19, 20) is provided, which is driven directly or indirectly by a shaft (5) that couples the compressor (2) to the turbine (4).

4. Cooling air system according to one or more of Claims 1 to 3,
**characterised in that**
for the cooling air emerging from the heat exchanger (6) a device for regulating the quantity of air and if necessary the air temperature, the latter by mixing in hotter cooling air that has not passed through the heat exchanger is provided, preferably in the form of a control and mixing valve (22).

5. Cooling air system according to one or more of Claims 1 to 4,
**characterised in that**
points (10, 11, 12) for tapping cooling air are provided downstream from the compressor (2) in the area of the combustion chamber jacket (9).

6. Cooling air system according to one or more of Claims I to 5,
**characterised in that**
the cooling air flow for a part-stream of the cooling air coming from the heat exchanger (6) or from the control and mixing valve (22), follows a flow path through the central opening (16) of at least one turbine disc (15).

7. Cooling air system according to one or more of Claims 1 to 6,
**characterised in that**
the heat exchanger (6) comprises an area (23) with cooling-air/air heat transfer and an area (24) with cooling-air/fuel (25) heat transfer, and the two areas (23, 24) can be spatially associated or separate from one another.

## Revendications

1. Système d'air de refroidissement destiné à réduire la charge thermique de composants dans la zone de haute pression de turbines à gaz qui comportent au moins un compresseur, une chambre de combustion et une turbine, comprenant des ailettes traversées par de l'air de refroidissement qui présentent chacune, à l'intérieur de l'ailette, plusieurs chambres d'écoulement séparées pour différents courants d'air, et comprenant un guidage de l'air de refroidissement contournant la zone de haute température de la chambre de combustion, depuis la zone de haute pression respectivement de la zone de sortie du compresseur jusqu'aux ailettes de la zone de haute pression de la turbine,
chacune des ailettes (13, 14, 26) fortement chargées thermiquement présentant une chambre d'écoulement (27) dans la zone de son bord d'attaque, au moins une chambre d'écoulement (28) dans la zone de milieu de son profil ainsi qu'une chambre d'écoulement (29) dans la zone de son bord de fuite,
**caractérisé en ce que**
le guidage de l'air de refroidissement comporte au moins un échangeur de chaleur (6) pour la réduction de la température d'un flux partiel de l'air de refroidissement provenant du compresseur (2), ainsi qu'au moins une liaison de flux depuis la sortie de l'échangeur de chaleur (6) jusqu'aux chambres d'écoulement la plus en avant (27) et la plus en arrière (29) de chaque ailette (13, 14, 26), le guidage de l'air de refroidissement s'étendant directement jusqu'à la au moins une chambre d'écoulement (28) de milieu, c'est-à-dire contournant l'échangeur de chaleur (6).

2. Système d'air de refroidissement selon la revendication 1 pour un turboréacteur de construction à deux circuits, c'est-à-dire un réacteur à soufflante, **caractérisé en ce que** l'échangeur de chaleur (6) est aménagé en aval de la soufflante dans le canal (21) de dérivation.

3. Système d'air de refroidissement selon la revendication 1 ou 2, **caractérisé en ce qu'**un compresseur supplémentaire (19, 20) d'air de refroidissement est disponible pour l'air de refroidissement provenant de l'échangeur de chaleur (6), lequel compresseur est entraîné directement ou indirectement par un arbre (5) couplant le compresseur (2) à la turbine (4).

4. Système d'air de refroidissement selon l'une quelconque ou plusieurs des revendications 1 à 3, **caractérisé en ce qu'**il est disponible, pour l'air de refroidissement sortant de l'échangeur de chaleur (6), une installation destinée à la régulation de la quantité d'air ainsi que, le cas échéant, la température de l'air, ce dernier processus étant effectué par un mélange avec de l'air de refroidissement plus chaud, non guidé à travers l'échangeur de chaleur, l'installation étant de préférence sous la forme d'une soupape (22) de régulation ou de mélange.

5. Système d'air de refroidissement selon l'une quelconque ou plusieurs des revendications 1 à 4, **caractérisé en ce que** des emplacements (10, 11, 12) pour le prélèvement d'air de refroidissement en aval du compresseur (2) sont prévus dans la zone de la chemise (9) de chambre de combustion.

6. Système d'air de refroidissement selon l'une quelconque ou plusieurs des revendications 1 à 5, **caractérisé en ce que** le guidage de l'air de refroidissement comporte, pour un flux partiel de l'air de refroidissement provenant de l'échangeur de chaleur (6) respectivement de la soupape (22) de régulation et de mélange, un chemin d'écoulement traversant l'ouverture centrale (16) d'au moins un rotor (15) de turbine.

7. Système d'air de refroidissement selon l'une quelconque ou plusieurs des revendications 1 à 6, **caractérisé en ce que** l'échangeur de chaleur (6) présente une zone (23) comprenant un transfert de chaleur air de refroidissement / air ainsi qu'une zone (24) comprenant un transfert de chaleur air de refroidissement / combustible (25), les deux zones (23, 24) pouvant être regroupées spatialement ou séparées l'une de l'autre.
